# EUROPÄISCHE PATENTSCHRIFT

(11) **EP 3 091 369 B1**
(45) Veröffentlichungstag und Bekanntmachung des Hinweises auf die Patenterteilung: **11.07.2018**
(21) Anmeldenummer: 15166421.6
(22) Anmeldetag: 05.05.2015
(51) Int. Cl.: G01S 7/497, G01S 7/481, G01S 17/87, G01S 17/42, G01S 17/10

(54) **LASERSCANNER**
LASER SCANNER
LECTEUR LASER

(43) Veröffentlichungstag der Anmeldung: 09.11.2016
(73) Patentinhaber: SICK AG, 79183 Waldkirch (DE)
(72) Erfinder: Albert, Dr., Magnus, 79104 Freiburg (DE); Sigmund, Jörg, 79100 Freiburg (DE); Jachmann, Dr., Fabian, 79102 Freiburg (DE)

(56) Entgegenhaltungen:
- WO-A1-98/16801
- WO-A2-2006/077588
- DE-A1- 19 858 129
- KR-A- 20130 130 358
- US-A1- 2011 240 865

## Beschreibung

Die vorliegende Erfindung betrifft einen Laserscanner.

Laserscanner haben ein breites Spektrum an Anwendungsmöglichkeiten und werden in vielen Bereichen zur Sicherung von Maschinen und Anlagen eingesetzt.

Basierend auf dem Prinzip der Lichtlaufzeit-Messung tastet ein Laserscanner wie ein optisches Radar seine Umgebung ab und erkennt zuverlässig Objekte in definierten Überwachungs- oder Schutzfeldern. Das tastende Messprinzip, das nicht auf ein festes Referenzziel angewiesen ist, macht Laserscanner äußerst flexibel und insbesondere auch für mobile Applikationen anwendbar.

Die Verwendung optischer Strahlung erlaubt es, Öffnungswinkel von Sender und Empfänger durch optische Elemente zu formen. In der Regel wird dabei der Sendestrahl möglichst kollimiert und die Empfangskeule an die Geometrie des Sendestrahls angepasst, um ein möglichst hohes Messsignal zu generieren und gleichzeitig unempfindlich gegen Fremdlicht und andere Störer zu sein. Die optischen Elemente beeinflussen maßgeblich den abstandsabhängigen Signalpegel, der vom Empfänger für ein Target, bzw. ein Objekt einer bestimmten Remission detektiert wird. Der Fachmann spricht hier von der Signaldynamik des Systems.

Wünschenswert wäre eine möglichst homogene Signaldynamik, bei der sich die Amplitude des detektierten Echosignals über den Abstand nur wenig ändert. Im Fernfeld bzw. Fernbereich fällt diese jedoch aufgrund der Lambertschen Strahlcharakteristik der Targets mit 1/Abstand² ab.

Im Nahbereich steigt die Signaldynamik typischerweise von einem sehr niedrigen Wert direkt am Gerät schnell an und erreicht im Bereich von einigen Metern ihr Maximum. Insbesondere im Nahbereich ist eine Überlappung von Sende- und Empfangskeule für die Signaldynamik maßgeblich. Mit einfachen sphärischen Linsen lässt sich in der Regel keine zufriedenstellende Signaldynamik erreichen und man verwendet stattdessen asphärische Linsen oder Mehrzonenlinsen.

Insbesondere bei Sicherheitslaserscannern wird vorausgesetzt, dass auch Objekte direkt vor oder am Gerät detektiert werden und keine Bereiche entstehen, in denen das System 'blind' ist, was insbesondere bei biaxialen Anordnungen, bei denen sich die optischen Achsen von Sende- und Empfangspfad nicht überlagern, eine große Herausforderung darstellt.

Zudem spricht diese Anforderung einer weiteren entgegen, nämlich möglichst unempfindlich auf eine verschmutzte Frontscheibe zu reagieren. So kann eine verschmutzte Frontscheibe zu einer sehr starken Rückstreuung führen, welche das eigentliche Messsystem stark beeinflusst, und eventuell schon zu einem Überschreiten einer Auslöseschwelle führt. So wird in heutigen Scannern sehr viel Aufwand in die Optimierung/Verringerung des Frontscheibenrückreflexes gesteckt, um das Echosignal an der Frontscheibe unter einem ,Worst-Case' Signal bei maximaler Schutzfeldreichweite zu halten.

Laserscanner nach dem Stand der Technik verwenden in der Regel Mehrzonenlinsen im Empfangspfad, wobei die einzelnen Zonen unterschiedliche Brennweiten aufweisen und für die Detektion in einem bestimmten Abstand optimiert sind. Die Zonen können dabei konzentrisch oder asymmetrisch angeordnet sein.

Selbst bei der Verwendung von Mehrzonenlinsen ist die Detektionsfähigkeit im Nahbereich stark eingeschränkt. Zusätzlich verwenden die Nahbereichszonen einen nicht unerheblichen Teil der optischen Apertur und schränken so die effektive Fläche, die für die Detektion im Fernbereich zur Verfügung steht, ein und limitieren somit die Reichweite eines Laserscanners.

Die EP 1 983 354 A1 offenbart einen Laserscanner mit einem zweiten Hilfssender.

Die DE 102 44 641 A1 offenbart einen Laserscanner mit zwei Sendern und einem gemeinsamen Empfänger.

Die DE 44 02 642 A1 offenbart einen Laserscanner mit zwei Sendern für unterschiedliche Höhenabtastung.

Die WO 2006/077588 offenbart einen Laserscanner zur Entfernungsbestimmung der an einer Front eines Flugzeuges angeordnet werden kann.

Die DE 198 58 129 A1 offenbart ein Verfahren und eine Vorrichtung zum Detektieren von Hindernissen unter Verwendung von multiplen Sensoren für eine abstands- bzw. bereichsselektive Detektion. Ein ähnliches System mit integrierten Sensoren offenbart KR1020130130358. Die WO 98/168001 A1 offenbart einen Laserentfernungssensor für Fahrzeuge.

Die US 2011/0240865 A1 offenbart ein medizinisches Bildbereitstellungssystem, insbesondere einen Computertomographen mit einem Sensor mit einem Einzelphotonendetektor.

Eine Aufgabe der Erfindung besteht darin, einen Laserscanner bereitzustellen, der eine Messfähigkeit im Nahbereich sicherstellt. Eine weitere Aufgabe liegt darin, einen Laserscanner bereitzustellen, der eine verbesserte Detektion in einem Nahbereich und einem Fernbereich aufweist.

Die Aufgabe wird gemäß Anspruch 1 gelöst durch einen Laserscanner nach dem Lichtlaufzeitprinzip mit einem ersten Lichtsender, der aufeinanderfolgende erste Lichtimpulse in einen Messbereich aussendet und mit einem ersten Lichtempfänger, welcher die an einem Objekt im Messbereich zurückgeworfenen Lichtimpulse aufnimmt und in Form von elektrischen Empfangssignalen einer Auswerteeinheit zuführt, die unter Berücksichtigung der Lichtgeschwindigkeit aus der Zeit zwischen Aussendung und Empfang des Lichtimpulses ein für den Abstand des Objektes zum Laserscanner repräsentatives Abstandssignal ermittelt sowie einer zwischen dem ersten Lichtsender und dem Messbereich angeordneten Lichtablenkeinheit, welche die Lichtimpulse in sich fortlaufend verändernden Richtungen in den Messbereich umlenkt, wobei ein zweiter Lichtsender vorhanden ist, der aufeinanderfolgende zweite Lichtimpulse mit reduzierter Leistung für einen Nahbereich aussendet, ein zweiter Lichtempfänger angeordnet ist, der dazu ausgebildet ist, die aus dem Nahbereich zurückgeworfenen zweiten Lichtimpulse aufzunehmen und die an einem Objekt im Nahbereich zurückgeworfenen zweiten Lichtimpulse in Form von elektrischen Empfangssignalen der Auswerteeinheit zuführt, wobei der zweite Lichtsender und der zweite Lichtempfänger einen Nahbereichssensor bilden und der zweite Lichtempfänger (12) mindestens eine Einzelphotonenlawinendiode (16) aufweist. Gemäß der Erfindung ist der zusätzliche Nahbereichssensor vorgesehen. Gemäß der Erfindung decken der erste Lichtsender und der erste Lichtempfänger nicht die gesamte Reichweite des Laserscanners ab. Vielmehr decken der erste Lichtsender und der erste Lichtempfänger nur einen Mittenbereich und einen Fernbereich ab. Dadurch kann der erste Lichtsender und Lichtempfänger exakt auf diesen Bereich eingestellt und dimensioniert werden.

Der Nahbereichssensor braucht dagegen nur den Nahbereich erfassen. Die Reichweite des Nahbereichssensors wird beispielsweise so ausgelegt, dass dieser den Nahbereich, beispielsweise bis zu 50 cm erfassen kann.

Daher kann der Nahbereichssensor, welcher den zweiten Lichtsender und den zweiten Lichtempfänger aufweist, auf den Nahbereich eingestellt und dimensioniert werden. Gemäß der Erfindung müssen bei der Auslegung des ersten Lichtsenders/Lichtempfängers und des zweiten Lichtsenders/Lichtempfängers weniger Kompromisse in der Auslegung und Dimensionierung vorgenommen werden.

Weiter kann der erste Lichtempfänger und der zweite Lichtempfänger von der Auswerteeinheit unterschiedlich ausgewertet werden. Beispielsweise wird der erste Lichtempfänger häufiger und in kleineren Zeitabständen ausgewertet als der zweite Lichtempfänger. Der zweite Lichtempfänger weist beispielsweise eine geringere Empfindlichkeit auf als der erste Lichtempfänger, so dass der zweite Lichtempfänger auf den Nahbereich eingestellt ist. Es kann auch vorgesehen sein, dass die Auswerteeinheit für den zweiten Empfänger eine höhere Empfangsschwelle vorsieht als für den ersten Empfänger.

Weiter kann der erste Lichtsender und der zweite Lichtsender von einer Steuereinheit unterschiedlich angesteuert werden. Beispielsweise wird der erste Lichtsender häufiger und in kleineren Zeitabständen angesteuert als der zweite Lichtsender. Weiter weist der erste Sender optional eine höhere Sendeleistung auf als der zweite Lichtsender.

Weiter kann der erste Lichtsender/Lichtempfänger und der zweite Lichtsender/Lichtempfänger von einer kombinierten Steuer- und Auswerteeinheit angesteuert bzw. ausgewertet werden.

Bei den Lichtsendern handelt es sich beispielsweise um einen Impulslaser der dazu ausgebildet ist, Laserpulse mit einer Dauer von ca. 0,3 ns bis 5 ns auszusenden.

Gemäß der Erfindung kann der Nahbereichssensor kompakt und kostengünstig ausgeführt werden, da die Anforderungen an den Nahbereichssensor geringer sind als die Anforderungen an das Haupt-Messsystem mit dem ersten Lichtsender und dem ersten Lichtempfänger.

Der Nahbereichssensor ist beispielsweise ein hochintegriertes Modul. Beispielsweise kann das Modul VL6180x von ST-Microelectronics verwendet werden. Dieses Modul ist sehr preiswert. Dieses Modul umfasst in einem einzelnen Gehäuse mit den Abmessungen von ca. 5 mm x 3 mm neben dem zweiten Lichtsender und dem zweiten Lichtempfänger auch eine vollständige Steuer- und Auswerteeinheit. Denkbar ist aber auch die Verwendung anderer kompakter Nahbereichssensoren. Der Nahbereichssensor ist beispielsweise ein integriertes CMOS-Modul.

Eine optionale Optik des ersten Lichtsenders und des ersten Lichtempfängers kann auf eine Objektdetektion für größere Abstände, beispielsweise größer als 50 cm optimiert werden. Eine Verwendung von Mehrzonenlinsen ist damit nicht mehr notwendig.

Die Verwendung des Nahbereichssensors erlaubt es insbesondere, eine optionale Optik des Hauptmesssystems so auszulegen, dass dieser Objekte unmittelbar vor der Frontscheibe nicht erfasst, in diesem Bereich also 'blind' ist. Dies erhöht die Robustheit des Laserscanners, da Störungen durch Verschmutzung oder Benetzung der Frontscheibe nicht unmittelbar zu einer Fehldetektion führen.

Gemäß der Erfindung kann eine Sensitivität bzw. Empfindlichkeit im Nah- und Fernbereich generell besser aufeinander abgestimmt und insbesondere unabhängig voneinander abgestimmt werden, da diese nicht mehr voneinander abhängen.

In Weiterbildung der Erfindung ermittelt die Auswerteeinheit unter Berücksichtigung der Lichtgeschwindigkeit aus der Zeit zwischen Aussendung der zweiten Lichtimpulse durch den zweiten Lichtsender und Empfang der zweiten Lichtimpulse durch den zweiten Lichtempfänger ein für den Abstand des Objektes zum Laserscanner repräsentatives Abstandssignal. Dadurch kann die Auswerteeinheit ein genaues Abstandssignal im Nahbereich ermitteln, so dass die räumliche Lage des Objektes im Nahbereich genau erfasst werden kann. Dadurch liegen genaue Abstandsinformationen sowohl für den Nah-, Mittel-, und Fernbereich vor.

In der Erfindung weist der zweite Lichtempfänger mindestens eine Einzelphotonenlawinendiode auf.

Die englische Originalbezeichnung von Einzelphotonenlawinendiode lautet 'Single Photon Avalanche Detektor', kurz SPAD. Weitere gängige Bezeichnungen von Einzelphotonenlawinendiode sind 'Silicon Photomultiplier', kurz SiPM, 'Geigermode Avalanche Photo Detektor' oder 'Single Photon Counting Diode'.

Durch die hohe Sensitivität der Einzelphotonenlawinendiode kann diese ohne Empfangsoptik verwendet werden. Denkbar ist aber auch die Verwendung einer konventionellen Optik für den zweiten Lichtsender und den zweiten Lichtempfänger oder der Einsatz von optischen Elementen auf Chiplevel. Weiter können Optiken in ein Chipgehäuse eines ASICs integriert sein, um einen kostengünstigen und kompakten Nahbereichssensor bei hohen Stückzahlen zu erreichen.

Auch ein optischer Bandpassfilter kann direkt auf dem Chip oder auf den optischen Elementen aufgedampft werden, um Hintergrundlicht abzuschwächen.

Weiter kann auch ein Einzelphotonenlawinendiodenarray, welches eine Vielzahl von Einzelphotonenlawinendioden in einer Matrixanordnung aufweist, vorgesehen sein.

Durch die hohe Sensitivität, beispielsweise von Einzelphotonenlawinendiodenarrays können entsprechende Module, welche den zweiten Sender und den zweiten Empfänger beinhalten, je nach gewünschter Reichweite komplett ohne Sende- und/oder Empfangsoptik verwendet werden.

In Weiterbildung der Erfindung ist dem zweiten Lichtsender eine Sendeoptik, insbesondere eine Linse vorgeordnet.

Bei der Sendeoptik kann es sich beispielsweise um eine konventionelle Optik handeln. Jedoch können auch optische Elemente vorgesehen sein, welche direkt auf dem Chip des Lichtsenders angeordnet sind oder in den Chip des zweiten Lichtsenders integriert sind. Dadurch kann eine kostengünstige und kompakte Lösung bei hohen Stückzahlen erreicht werden.

In Weiterbildung der Erfindung ist dem zweiten Lichtempfänger eine Empfangsoptik, insbesondere eine Linse vorgeordnet.

Bei der Empfangsoptik kann es sich beispielsweise um eine konventionelle Optik handeln. Jedoch können auch optische Elemente vorgesehen sein, welche direkt auf dem Chip des Lichtsenders angeordnet sind oder in den Chip des zweiten Lichtsenders integriert sind. Dadurch kann eine kostengünstige und kompakte Lösung bei hohen Stückzahlen erreicht werden.

Gemäß einer besonderen Ausführungsform ist der Nahbereichssensor an der Lichtablenkeinheit angeordnet, insbesondere auf der gegenüberliegenden Seite eines Umlenkspiegels der Lichtablenkeinheit.

Der Nahbereichssensor wird beispielsweise auf der Rückseite der Lichtablenkeinheit, also auf der gegenüberliegenden Seite des Umlenkspiegels angebracht und überstreicht mit einem Versatz von 180° den Erfassungsbereich des Laserscanners.

Dadurch können die Lichtsignale durch eine gemeinsame Steuer- und Auswerteeinheit für den ersten Lichtsender und den zweiten Lichtsender nacheinander erzeugt werden.

Auch die Empfangssignale können durch eine gemeinsame Steuer- und Auswerteeinheit für den ersten Lichtempfänger und den zweiten Lichtempfänger nacheinander erfasst und ausgewertet werden.

In einer weiteren bevorzugten Ausführung ist zwischen dem zweiten Lichtsender und dem Messbereich die Lichtablenkeinheit angeordnet, welche die zweiten Lichtimpulse in sich fortlaufend verändernden Richtungen in den Messbereich umlenkt.

Dadurch kann der zweite Lichtsender ortsfest am Gehäuse des Laserscanners angeordnet werden, wobei ein ortsveränderlicher Lichtstrahl über die Lichtablenkeinheit in den Messbereich bzw. Überwachungsbereich geführt wird.

In Weiterbildung der Erfindung ist die Messfrequenz des Nahbereichssensors geringer, als die Messfrequenz des ersten Lichtsenders und des ersten Lichtempfängers.

Die Reichweite des Nahbereichssensors wird beispielsweise so ausgelegt, dass beispielsweise ein Bereich bis zu 50 cm ausgehend vom Laserscanner erfasst wird. Da in diesem Bereich die transversale Ausdehnung der überstrichenen Winkelsegemente klein ist, kann beispielsweise die Messfrequenz des Nahbereichssensors im Vergleich zum eigentlichen Messsystem, nämlich dem ersten Lichtsender und dem ersten Lichtempfänger geringer sein.

Um beispielsweise eine Objektauflösung von 2 cm zu realisieren, ist bei 50 cm Reichweite eine Winkelauflösung von 2° ausreichend. Bei einer Rotationsfrequenz des Spiegels von 25 Hz würde dies einer Wiederholrate der Messung von etwa 4500 Hz entsprechen.

In Weiterbildung der Erfindung erfasst der Nahbereichssensor Referenztestziele des Laserscanners, wodurch der Nahbereichssensor überwachbar und testbar ist. Die Referenztestziele führen zu einem Referenzsignal, welches zyklisch erfasst werden muss. Nur wenn das Referenzsignal zyklisch erfasst wird, ist die Funktion des Laserscanners gewährleistet. Bei dem Referenztestziel kann es sich beispielsweise um einen im Gehäuseinnern angeordneten Reflektor, eine helle Referenzfläche und/oder eine dunkle Referenzfläche handeln, so dass beispielsweise ein hoher Dynamikbereich überprüfbar ist.

In Weiterbildung der Erfindung erfasst der Nahbereichssensor eine Frontscheibe des Laserscanners, wodurch Verschmutzungen auf der Frontscheibe detektierbar sind. Durch Verschmutzungen auf der Frontscheibe werden Abstandsignale bei bekanntem Abstand der Frontscheibe generiert. Dazu werden beispielsweise die Abstandsignale der Frontscheibe und die detektierte Signalhöhe der von der Frontscheibe reflektierten Pulse bei nicht verschmutzter sauberer Frontscheibe eingelernt und gespeichert. Bei einer verschmutzten Frontscheibe werden von der Frontscheibe stärkere Lichtempfangssignale erzeugt, woraufhin eine Verschmutzung der Frontscheibe festgestellt werden kann. Da eine Frontscheibe insbesondere häufig gleichmäßig stetig verschmutzt, kann durch einen festgelegten Schwellwert ein erlaubter bzw. ein nicht erlaubter Verschmutzungsgrad der Frontscheibe eingestellt werden.

In Weiterbildung der Erfindung erfasst der Nahbereichssensor Reflektoren, insbesondere Retroreflektoren im Messbereich. Dabei kann der Nahbereichssensor optional dazu ausgebildet sein, Reflektoren, insbesondere Retroreflektoren im Fernbereich zu erfassen.

Zur Entfernungsmessung des Nahbereichssensors sind verschiedene Lichtlaufzeitverfahren mit einer entsprechenden Auswertung implementierbar.

Wie bereits erläutert, kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statisch. Hintergrundlicht erzeugen hingegen zufällig verteilte Zeitstempel.

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren, kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Zur sicherheitsgerichteten Selbsttestung kann der Nahbereichssensor einen zweiten Empfangskanal, also einen dritten Lichtempfänger aufweisen. Dieser dritte Lichtempfänger dient als Referenzempfänger und übernimmt die Aufgabe eines Referenzziels. Der dritte Empfänger sitzt in einer identischen Gehäusekammer des Nahbereichssensors wie der zweite Lichtsender und ist durch eine Kanaltrennung vom zweiten Lichtempfänger getrennt. Der dritte Lichtempfänger kann identisch wie der zweite Lichtempfänger ausgebildet sein.

Der Referenzempfänger zeichnet Signale synchron zur eigentlichen Messung mit dem zweiten Lichtempfänger auf und ermöglicht den Vergleich der Messsignale mit eingelernten Werten. Beispielsweise können der zeitliche Verlauf des Sendepulses und die Amplitude überprüft werden. Der Referenzempfänger kann beispielsweise auch in CMOS-Technologie integriert werden.

Der Referenzempfänger ermöglicht folgende Selbsttestungen:
Erstens kann über Streulicht innerhalb der Gehäusekammer des Nahbereichssensors im Referenzempfänger die Leistung, insbesondere Laserleistung des zweiten Lichtsenders in jedem Messzyklus überwacht werden. Große Abweichungen oder ein Ausfall des zweiten Lichtsenders können so erkannt werden.

Zweitens kann das genaue Zeitverhalten bzw. Timing des zweiten Lichtsenders überwacht werden und eventuell auftretende Offsets können korrigiert werden, z. B. bei Temperatureinflüssen.

Drittens kann eine verschmutzte Frontscheibe des Laserscanners über eine Änderung des Frontscheibenechos durch Rückstreuung an den Schmutzpartikeln auf der Frontscheibe detektiert werden.

Viertens sind Manipulationsversuche ebenfalls über die Rückstreuung zum Referenzempfänger erkennbar, auch wenn der zweite Lichtempfänger kein Signal erhält.

Fünftens kann in den Phasen, in denen kein Licht ausgesendet wird, an dem Referenzempfänger der Fremdlichtpegel gemessen werden. Das entsprechende Messsignal kann mit dem Signal des zweiten Lichtempfängers verglichen werden, wodurch die Sensitivität des zweiten Lichtempfängers verifiziert werden kann und mit optionaler anderer Skalierung zur Überprüfung des nötigen Signal-Rausch Abstandes im eigentlichen Messkanal herangezogen werden kann.

Weiter kann auch ein Referenzsender als dritter Lichtsender vorgesehen werden.

Der Referenzsender kann zur Testung des zweiten Lichtempfängers in der Gehäusekammer des zweiten Lichtempfängers integriert werden. Hierdurch kann eine Testung des Empfangskanals auf das Zeitverhalten bzw. Timing, sowie signalhöhenabhängige Effekte durchgeführt werden. Der Referenzsender ist hier bevorzugt nahe am zweiten Lichtempfänger angebracht und kann beispielsweise ebenfalls in CMOS integriert werden.

Aufgrund der räumlichen Nähe lässt sich der zusätzliche Referenzsender mit einem leistungsschwächeren und damit kostengünstigeren Lichtsender realisieren. Die Sendeleistung des Referenzsenders wird so eingestellt, dass die Signalhöhe den tatsächlichen Empfangssignalen des zweiten Lichtempfängers entspricht. Gleiches gilt für den zeitlichen Verlauf des Sendesignals des Referenzsenders.

Zur Testung des zweiten Lichtempfängers können optische Testpulse mit unterschiedlichen zeitlichen Verläufen und Amplituden verwendet werden und über ein steuerbares Delay relativ zum Startzeitpunkt der Messung eine Lichtlaufzeit imitiert werden.

Damit ermöglicht der Referenzsender folgende Testungen:
Erstens kann eine Linearität und eine Integrität der Empfangssignale des zweiten Lichtempfängers für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden die Dynamik und die Sensitivität des zweiten Lichtempfängers überprüft werden. Die Messungen können auch zur Kompensation von Alterungseffekten oder Degration oder zur Kompensation von Temperatureffekten verwendet werden. Im Laserscanner werden hierfür beispielsweise zwei Referenzziele angeordnet, wobei ein erstes Referenzziel eine hohe Remission aufweist und ein zweites Referenzziel eine niedrige Remission aufweist und die entsprechenden Messsignale während jeder Umdrehung einmal gemessen werden.

Drittens können z. B. bei Bedarf Übersteuerungsmessungen durchgeführt werden.

Hier kann es sich vorteilhaft auswirken, wenn Sende- und Empfangskonus einen moderaten Öffnungswinkel aufweisen und diffus reflektierende Objekte im Fernfeld aus energetischen Gründen nicht detektiert werden, während Reflektoren ausreichend Signale für eine Erkennung liefern. Dies hat den Vorteil, dass sich die Anforderungen an die beherrschbare Dynamik des ersten Lichtlaufzeit Messsystems mit dem ersten Lichtsender und dem ersten Lichtempfänger deutlich reduzieren.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Signalverlauf für eine 1-Zonen Empfangslinse nach dem Stand der Technik;
- Figur 2: einen Signalverlauf für eine 2-Zonen Empfangslinse nach dem Stand der Technik;
- Figur 3: einen Laserscanner gemäß der Erfindung;
- Figur 4: einen weiteren Laserscanner gemäß der Erfindung;
- Figur 5: einen Nahbereichssensor.

In den nachfolgenden Figuren sind identische Teile mit identischen Bezugszeichen versehen.

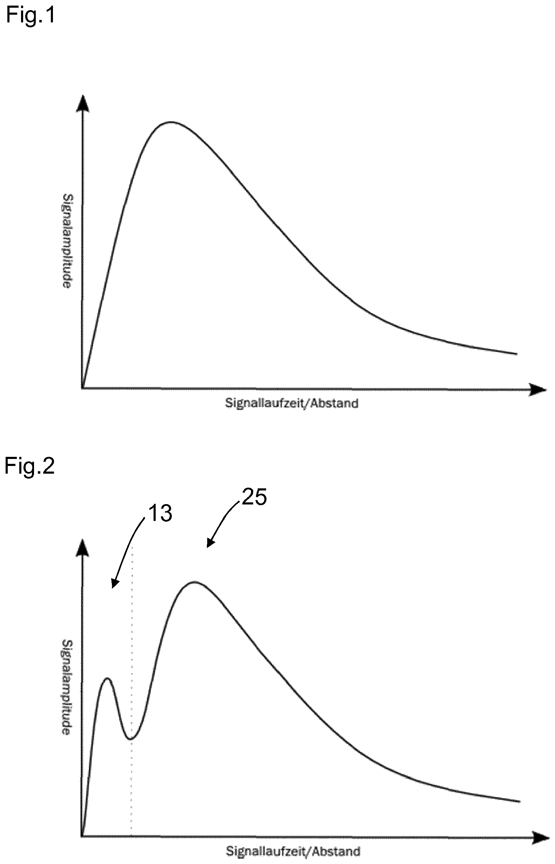

Figur 1 zeigt eine typische Signaldynamik für eine Einzonen-Empfangslinse nach dem Stand der Technik. Auf einer Y-Achse ist eine Signalamplitude aufgetragen. Auf einer X-Achse ist eine Signallaufzeit bzw. ein Abstand angegeben.

Figur 2 zeigt eine typische Signaldynamik für eine Zweizonen-Empfangslinse nach dem Stand der Technik. Auf einer Y-Achse ist eine Signalamplitude aufgetragen. Auf einer X-Achse ist eine Signallaufzeit bzw. ein Abstand angegeben. Mit dem Bezugszeichen 13 ist ein Nahbereich bzw. eine Nahbereichszone angegeben. Mit dem Bezugszeichen 25 ist ein Fernbereich bzw. eine Fernbereichszone angegeben.

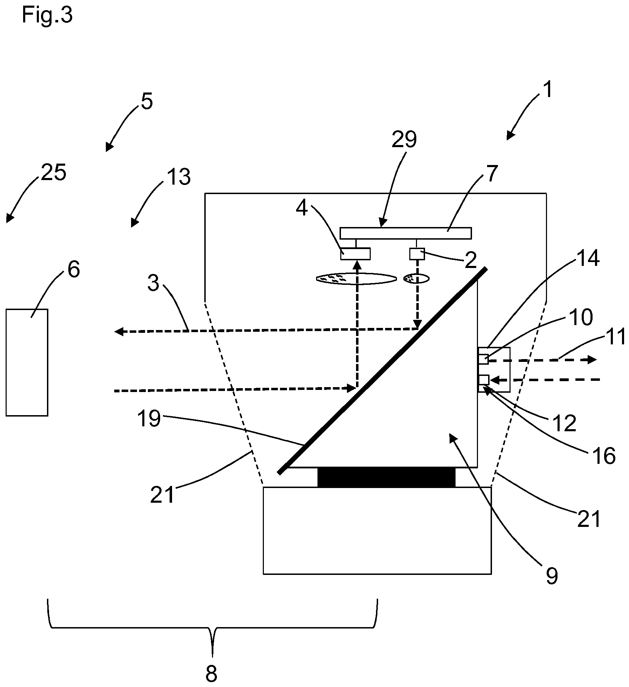

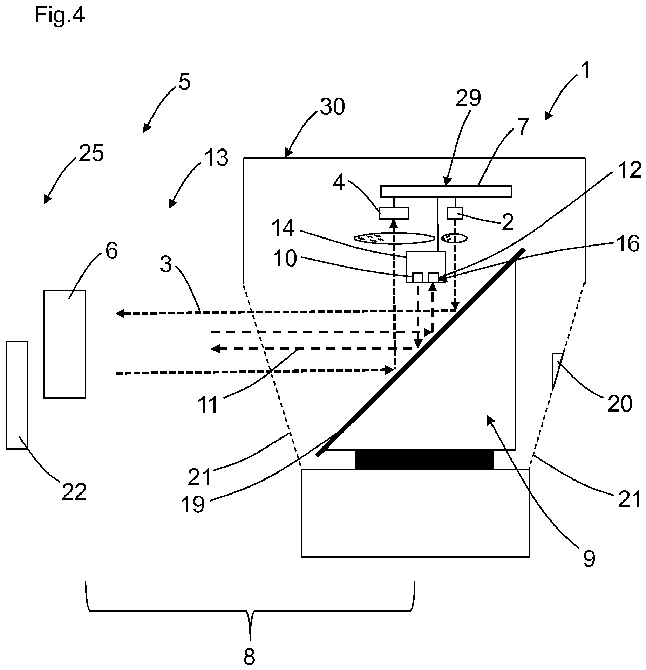

Figur 3 bzw. Figur 4 zeigt einen Laserscanner 1 nach dem Lichtlaufzeitprinzip mit einem ersten Lichtsender 2, der aufeinanderfolgende erste Lichtimpulse 3 in einen Messbereich 5 bzw. Überwachungsbereich aussendet und mit einem ersten Lichtempfänger 4, welcher die an einem Objekt 6 im Messbereich 5 zurückgeworfenen Lichtimpulse aufnimmt und in Form von elektrischen Empfangssignalen einer Auswerteeinheit 7 zuführt, die unter Berücksichtigung der Lichtgeschwindigkeit aus der Zeit zwischen Aussendung und Empfang des Lichtimpulses ein für den Abstand 8 des Objektes 6 zum Laserscanner 1 repräsentatives Abstandssignal ermittelt, sowie einer zwischen dem ersten Lichtsender 2 und dem Messbereich 5 angeordneten Lichtablenkeinheit 9, welche die Lichtimpulse in sich fortlaufend verändernden Richtungen in den Messbereich 5 umlenkt, wobei ein zweiter Lichtsender 10 vorhanden ist, der aufeinanderfolgende zweite Lichtimpulse mit reduzierter Leistung für einen Nahbereich 13 aussendet, ein zweiter Lichtempfänger 12 angeordnet ist, der dazu ausgebildet ist, die aus dem Nahbereich 13 zurückgeworfenen zweiten Lichtimpulse 11 aufzunehmen und die an einem Objekt 6 im Nahbereich 13 zurückgeworfenen zweiten Lichtimpulse in Form von elektrischen Empfangssignalen der Auswerteeinheit 7 zuführt, wobei der zweite Lichtsender 10 und der zweite Lichtempfänger 12 einen Nahbereichssensor 14 bilden.

Gemäß Figur 3 bzw. Figur 4 ist der zusätzliche Nahbereichssensor 14 dargestellt. Dabei decken der erste Lichtsender 2 und der erste Lichtempfänger 4 nicht die gesamte Reichweite des Laserscanners 1 ab. Vielmehr decken der erste Lichtsender 2 und der erste Lichtempfänger 4 nur einen Mittenbereich und einen Fernbereich 25 ab.

Der Nahbereichssensor 14 braucht dagegen nur den Nahbereich 13 zu erfassen. Die Reichweite des Nahbereichssensors 14 wird beispielsweise so ausgelegt, dass dieser den Nahbereich 13, beispielsweise bis zu 50 cm erfassen kann.

Daher kann der Nahbereichssensor 14, welcher den zweiten Lichtsender 10 und den zweiten Lichtempfänger 12 aufweist, auf den Nahbereich 13 eingestellt und dimensioniert werden.

Weiter kann der erste Lichtempfänger 4 und der zweite Lichtempfänger 12 von der Auswerteeinheit 7 unterschiedlich ausgewertet werden. Beispielsweise wird der erste Lichtempfänger 4 häufiger und in kleineren Zeitabständen ausgewertet als der zweite Lichtempfänger 12. Der zweite Lichtempfänger 12 weist beispielsweise eine geringere Empfindlichkeit auf als der erste Lichtempfänger 4, so dass der zweite Lichtempfänger 12 auf den Nahbereich 13 eingestellt ist. Es kann auch vorgesehen sein, dass die Auswerteeinheit 7 für den zweiten Lichtempfänger 12 eine höhere Empfangsschwelle vorsieht als für den ersten Lichtempfänger 4.

Weiter kann der erste Lichtsender 2 und der zweite Lichtsender 10 von einer Steuereinheit 28 unterschiedlich angesteuert werden. Beispielsweise wird der erste Lichtsender 2 häufiger und in kleineren Zeitabständen angesteuert als der zweite Lichtsender 10. Weiter weist der erste Lichtsender 2 eine höhere Sendeleistung auf als der zweite Lichtsender 10.

Weiter kann der erste Lichtsender/Lichtempfänger und der zweite Lichtsender/Lichtempfänger von einer kombinierten Steuer- und Auswerteeinheit 29 angesteuert bzw. ausgewertet werden.

Bei den Lichtsendern handelt es sich beispielsweise um einen Impulslaser der dazu ausgebildet ist, Laserpulse mit einer Dauer von wenigen Pikosekunden auszusenden.

Der Nahbereichssensor 14 ist beispielsweise ein hochintegriertes Modul. Beispielsweise kann das Modul VL6180x von ST-Microelectronics verwendet werden. Dieses Modul umfasst in einem einzelnen Gehäuse mit den Abmessungen von ca. 5 mm x 3 mm neben dem zweiten Lichtsender 10 und dem zweiten Lichtempfänger 12 auch eine vollständige Steuer- und Auswerteeinheit.

Eine optionale Optik des ersten Lichtsenders 2 und des ersten Lichtempfängers 4 kann auf eine Objektdetektion für größere Abstände, beispielsweise größer als 50 cm optimiert werden.

Die Verwendung des Nahbereichssensors 14 erlaubt es insbesondere, eine optionale Optik des Hauptmesssystems so auszulegen, dass dieses Objekte 6 unmittelbar vor der Frontscheibe 21 nicht erfasst, in diesem Bereich also 'blind' ist.

Eine Sensitivität bzw. Empfindlichkeit kann im Nahbereich 13 und Fernbereich 25 generell besser aufeinander abgestimmt und insbesondere unabhängig voneinander abgestimmt werden, da diese nicht mehr voneinander abhängen.

Die Auswerteeinheit 7 ermittelt unter Berücksichtigung der Lichtgeschwindigkeit aus der Zeit zwischen Aussendung der zweiten Lichtimpulse 11 durch den zweiten Lichtsender 10 und Empfang der zweiten Lichtimpulse 11 durch den zweiten Lichtempfänger 12 ein für den Abstand 8 des Objektes 6 zum Laserscanner 1 repräsentatives Abstandssignal. Dadurch kann die Auswerteeinheit 7 ein genaues Abstandssignal im Nahbereich 13 ermitteln, so dass die räumliche Lage des Objektes 6 im Nahbereich 13 genau erfasst werden kann. Dadurch liegen genaue Abstandsinformationen sowohl für den Nahbereich 13, den Mittenbereich und den Fernbereich 25 vor.

Optional weist der zweite Lichtempfänger 12 mindestens eine Einzelphotonenlawinendiode 16 auf. Durch die hohe Sensitivität der Einzelphotonenlawinendiode 16 kann diese ohne Empfangsoptik verwendet werden. Denkbar ist aber auch die Verwendung einer konventionellen Optik für den zweiten Lichtsender 10 und den zweiten Lichtempfänger 12 oder der Einsatz von optischen Elementen auf Chiplevel. Weiter können Optiken in ein Chipgehäuse eines ASICs integriert sein, um einen kostengünstigen und kompakten Nahbereichssensor bei hohen Stückzahlen zu erreichen.

Auch ein optischer Bandpassfilter kann direkt auf dem Chip oder auf den optischen Elementen aufgedampft werden, um Hintergrundlicht abzuschwächen.

Weiter kann auch ein Einzelphotonenlawinendiodenarray, welches eine Vielzahl von Einzelphotonenlawinendioden 16 in einer Matrixanordnung aufweist, vorgesehen sein.

Durch die hohe Sensitivität, beispielsweise von Einzelphotonenlawinendiodearrays können entsprechende Module, welche den zweiten Lichtsender 10 und den zweiten Lichtempfänger 12 beinhalten, je nach gewünschter Reichweite komplett ohne Sende- und/oder Empfangsoptik verwendet werden.

Insbesondere ist dem zweiten Lichtsender 10 eine Sendeoptik, insbesondere eine Linse vorgeordnet.

Bei der Sendeoptik kann es sich beispielsweise um eine konventionelle Optik handeln. Jedoch können auch optische Elemente vorgesehen sein, welche direkt auf dem Chip des zweiten Lichtsenders 10 angeordnet sind oder in den Chip des zweiten Lichtsenders 10 integriert sind.

Insbesondere ist dem zweiten Lichtempfänger 12 eine Empfangsoptik, insbesondere eine Linse vorgeordnet.

Bei der Empfangsoptik kann es sich beispielsweise um eine konventionelle Optik handeln. Jedoch können auch optische Elemente vorgesehen sein, welche direkt auf dem Chip des zweiten Lichtempfängers 12 angeordnet sind oder in den Chip des zweiten Lichtempfängers 12 integriert sind.

Gemäß Figur 3 ist der Nahbereichssensor 14 an der Lichtablenkeinheit 9 angeordnet, insbesondere auf der gegenüberliegenden Seite eines Umlenkspiegels 19 der Lichtablenkeinheit 9.

Der Nahbereichssensor 14 wird beispielsweise auf der Rückseite der Lichtablenkeinheit 9, also auf der gegenüberliegenden Seite des Umlenkspiegels 19 angebracht und überstreicht mit einem Versatz von 180° den Erfassungsbereich des Laserscanners 1.

Dadurch können die Lichtsignale durch eine gemeinsame Steuer- und Auswerteeinheit 29 für den ersten Lichtsender 2 und den zweiten Lichtsender 10 nacheinander erzeugt werden.

Auch die Empfangssignale können durch eine gemeinsame Steuer- und Auswerteeinheit 29 für den ersten Lichtempfänger 4 und den zweiten Lichtempfänger 12 nacheinander erfasst und ausgewertet werden.

In einer weiteren bevorzugten Ausführung gemäß Figur 4 ist zwischen dem zweiten Lichtsender 10 und dem Messbereich 5 die Lichtablenkeinheit 9 angeordnet, welche die zweiten Lichtimpulse 11 in sich fortlaufend verändernden Richtungen in den Messbereich 5 umlenkt.

Dadurch kann der zweite Lichtsender 10 ortsfest am Gehäuse 30 des Laserscanners 1 angeordnet werden, wobei ein ortsveränderlicher Lichtstrahl über die Lichtablenkeinheit 9 in den Messbereich 5 bzw. Überwachungsbereich geführt wird.

Optional ist die Messfrequenz des Nahbereichssensors 14 geringer, als die Messfrequenz des ersten Lichtsenders 2 und des ersten Lichtempfängers 4.

Die Reichweite des Nahbereichssensors 14 wird beispielsweise so ausgelegt, dass beispielsweise ein Bereich bis zu 50 cm ausgehend vom Laserscanner 1 erfasst wird. Da in diesem Bereich die transversale Ausdehnung der überstrichenen Winkelsegmente klein ist, kann beispielsweise die Messfrequenz des Nahbereichssensors 14 im Vergleich zum eigentlichen Messsystem, nämlich dem ersten Lichtsender 2 und dem ersten Lichtempfänger 4 geringer sein.

Um beispielsweise eine Objektauflösung von 2 cm zu realisieren, ist bei 50 cm Reichweite eine Winkelauflösung von 2° ausreichend. Bei einer Rotationsfrequenz des Spiegels von 25 Hz würde dies einer Wiederholrate der Messung von etwa 4500 Hz entsprechen.

Vorzugsweise erfasst der Nahbereichssensor 14 Referenztestziele 20 des Laserscanners 1, wodurch der Nahbereichssensor 14 testbar ist. Die Referenztestziele 20 führen zu einem Referenzsignal, welches zyklisch erfasst werden muss. Nur wenn das Referenzsignal zyklisch erfasst wird, ist die Funktion des Laserscanners 1 gewährleistet. Bei dem Referenztestziel kann es sich beispielsweise um einen im Innern des Gehäuses 30 angeordneten Reflektor, eine helle Referenzfläche und/oder eine dunkle Referenzfläche handeln, so dass beispielsweise ein hoher Dynamikbereich überprüfbar ist.

Insbesondere erfasst der Nahbereichssensor 14 eine Frontscheibe 21 des Laserscanners 1, wodurch Verschmutzungen auf der Frontscheibe 21 detektierbar sind. Durch Verschmutzungen auf der Frontscheibe 21 werden Abstandsignale bei bekanntem Abstand der Frontscheibe 21 generiert. Dazu werden beispielsweise die Abstandsignale der Frontscheibe 21 bei nicht verschmutzter sauberer Frontscheibe 21 eingelernt und gespeichert. Bei einer verschmutzten Frontscheibe 21 werden von der Frontscheibe 21 stärkere Lichtempfangssignale erzeugt, woraufhin eine Verschmutzung der Frontscheibe 21 festgestellt werden kann. Da eine Frontscheibe 21 insbesondere häufig gleichmäßig stetig verschmutzt, kann durch einen festgelegten Schwellwert ein erlaubter bzw. ein nicht erlaubter Verschmutzungsgrad der Frontscheibe 21 eingestellt werden.

Optional erfasst der Nahbereichssensor 14 Reflektoren 22, insbesondere Retroreflektoren im Messbereich 5. Dabei kann der Nahbereichssensor 14 optional dazu ausgebildet sein, Reflektoren 22, insbesondere Retroreflektoren im Fernbereich 25 zu erfassen.

Hier kann es sich vorteilhaft auswirken, wenn Sende- und Empfangskonus des Nahbereichssensors einen moderaten Öffnungswinkel aufweisen und diffus reflektierende Objekte im Fernbereich 25 aus energetischen Gründen nicht detektiert werden, während Reflektoren 22 ausreichend Signale für eine Erkennung liefern. Dies hat den Vorteil, dass sich die Anforderungen an die beherrschbare Dynamik des ersten Lichtlaufzeit Messsystems mit dem ersten Lichtsender 2 und dem ersten Lichtempfänger 4 deutlich reduzieren.

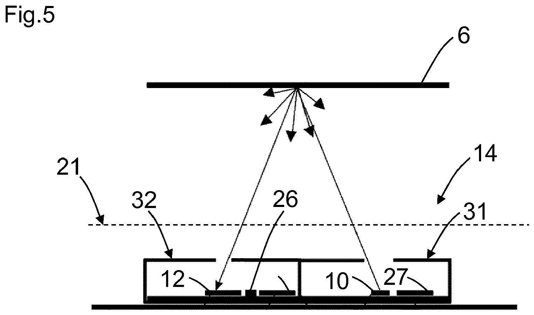

Figur 5 zeigt einen Nahbereichssensor 14. Zur sicherheitsgerichteten Selbsttestung kann der Nahbereichssensor 14 einen zweiten Empfangskanal, also einen dritten Lichtempfänger aufweisen. Dieser dritte Lichtempfänger dient als Referenzempfänger 27 und übernimmt die Aufgabe eines Referenzziels. Der dritte Lichtempfänger sitzt in einer identischen Gehäusekammer 31 des Nahbereichssensors 14 wie der zweite Lichtsender 10 und ist durch eine Kanaltrennung vom zweiten Lichtempfänger 12 getrennt. Der dritte Lichtempfänger kann identisch wie der zweite Lichtempfänger 12 ausgebildet sein.

Der Referenzempfänger 27 zeichnet Signale synchron zur eigentlichen Messung mit dem zweiten Lichtempfänger 12 auf und ermöglicht den Vergleich der Messsignale mit eingelernten Werten. Beispielsweise können der zeitliche Verlauf des Sendepulses und die Amplitude überprüft werden.

Der Referenzempfänger 27 ermöglicht folgende Selbsttestungen:
Erstens kann über Streulicht innerhalb der Gehäusekammer 31 des Nahbereichssensors 14 im Referenzempfänger 27 die Leistung, insbesondere Laserleistung des zweiten Lichtsenders 10 in jedem Messzyklus überwacht werden. Große Abweichungen oder ein Ausfall des zweiten Lichtsenders 10 können so erkannt werden.

Zweitens kann das genaue Zeitverhalten bzw. Timing des zweiten Lichtsenders 10 überwacht werden und eventuell auftretende Offsets können korrigiert werden, z. B. bei Temperatureinflüssen.

Drittens kann eine verschmutzte Frontscheibe 21 des Laserscanners 1 über eine Änderung des Frontscheibenechos durch Rückstreuung an den Schmutzpartikeln auf der Frontscheibe 21 detektiert werden.

Viertens sind Manipulationsversuche ebenfalls über die Rückstreuung zum Referenzempfänger 27 erkennbar, auch wenn der zweite Lichtempfänger 12 kein Signal erhält.

Fünftens kann in den Phasen, in denen kein Licht ausgesendet wird, an dem Referenzempfänger 27 der Fremdlichtpegel gemessen werden. Das entsprechende Messsignal kann mit dem Signal des zweiten Lichtempfängers 12 verglichen werden, wodurch die Sensitivität des zweiten Lichtempfängers 12 verifiziert werden kann und mit optionaler anderer Skalierung zur Überprüfung des nötigen Signal-Rausch Abstandes im eigentlichen Messkanal herangezogen werden.

Weiter kann auch ein Referenzsender 26 als dritter Lichtsender vorgesehen werden.

Der Referenzsender 26 kann zur Testung des zweiten Lichtempfängers 12 in der Gehäusekammer 32 des zweiten Lichtempfängers 12 integriert werden. Hierdurch kann eine Testung des Empfangskanals des Nahbereichssensors 14 auf das Zeitverhalten bzw. Timing sowie signalhöhenabhängige Effekte durchgeführt werden. Der Referenzsender 26 ist hier bevorzugt nahe am zweiten Lichtempfänger 12 angebracht und kann beispielsweise ebenfalls wie der zweite Lichtempfänger und wie der Referenzempfänger in CMOS integriert werden.

Aufgrund der räumlichen Nähe lässt sich der zusätzliche Referenzsender 26 mit einem leistungsschwächeren und damit kostengünstigeren Lichtsender realisieren. Die Sendeleistung des Referenzsenders 26 wird so eingestellt, dass die Signalhöhe den tatsächlichen Empfangssignalen des zweiten Lichtempfängers 12 entspricht. Gleiches gilt für den zeitlichen Verlauf des Sendesignals des Referenzsenders 26.

Zur Testung des zweiten Lichtempfängers 12 können optische Testpulse mit unterschiedlichen zeitlichen Verläufen und Amplituden verwendet werden und über ein steuerbares Delay relativ zum Startzeitpunkt der Messung eine Lichtlaufzeit simuliert werden.

Damit ermöglicht der Referenzsender 26 folgende Testungen:
Erstens kann eine Linearität und eine Integrität der Empfangssignale des zweiten Lichtempfängers 12 für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden die Dynamik und die Sensitivität des zweiten Lichtempfängers 12 überprüft werden. Die Messungen können auch zur Kompensation von Alterungseffekten oder Degration oder zur Kompensation von Temperatureffekten verwendet werden. Im Laserscanner 1 werden hierfür beispielsweise zwei Referenztestziele 20 angeordnet, wobei ein erstes Referenztestziel eine hohe Remission aufweist und ein zweites Referenztestziel eine niedrige Remission aufweist und die entsprechenden Messsignale während jeder Umdrehung einmal gemessen werden.

Drittens können z. B. bei Bedarf Übersteuerungsmessungen durchgeführt werden.

Hier kann es sich vorteilhaft auswirken, wenn Sende- und Empfangskonus des Nahbereichssensors 14 einen moderaten Öffnungswinkel aufweisen und diffus reflektierende Objekte im Fernbereich 25 aus energetischen Gründen nicht detektiert werden, während Reflektoren ausreichend Signale für eine Erkennung liefern. Dies hat den Vorteil, dass sich die Anforderungen an die beherrschbare Dynamik des ersten Lichtlaufzeit Messsystems mit dem ersten Lichtsender 10 und dem ersten Lichtempfänger 12 deutlich reduzieren.

### Bezugszeichen:

- 1: Laserscanner
- 2: erster Lichtsender
- 3: erste Lichtimpulse
- 4: erster Lichtempfänger
- 5: Messbereich
- 6: Objekt
- 7: Auswerteeinheit
- 8: Abstand
- 9: Lichtablenkeinheit
- 10: zweiter Lichtsender
- 11: zweite Lichtimpulse
- 12: zweiter Lichtempfänger
- 13: Nahbereich
- 14: Nahbereichssensor
- 16: Einzelphotonenlawinendiode
- 19: Umlenkspiegel
- 20: Referenztestziele
- 21: Frontscheibe
- 22: Reflektor
- 25: Fernbereich
- 26: Referenzlichtsender
- 27: Referenzlichtempfänger
- 29: Steuer- und Auswerteeinheit
- 30: Gehäuse
- 31: Gehäusekammer
- 32: Gehäusekammer

## Patentansprüche

1. Laserscanner nach dem Lichtlaufzeitprinzip mit einem ersten Lichtsender (2), der aufeinanderfolgende erste Lichtimpulse (3) in einen Messbereich (5) aussendet und mit
- einem ersten Lichtempfänger (4), welcher die an einem Objekt (6) im Messbereich (5) zurückgeworfenen Lichtimpulse (3) aufnimmt und in Form von elektrischen Empfangssignalen einer Auswerteeinheit (7) zuführt,
- die unter Berücksichtigung der Lichtgeschwindigkeit aus der Zeit zwischen Aussendung und Empfang des Lichtimpulses (3) ein für den Abstand (8) des Objektes (6) zum Laserscanner (1) repräsentatives Abstandssignal ermittelt
- sowie einer zwischen dem ersten Lichtsender (2) und dem Messbereich (5) angeordneten Lichtablenkeinheit (9), welche die Lichtimpulse (3) in sich fortlaufend verändernden Richtungen in den Messbereich (5) umlenkt,
**dadurch gekennzeichnet,**
- **dass** ein zweiter Lichtsender (10) vorhanden ist, der im Vergleich zum ersten Lichtsender (2) aufeinanderfolgende zweite Lichtimpulse (11) mit reduzierter Leistung in einen Nahbereich (13) aussendet,
- **dass** ein zweiter Lichtempfänger (12) angeordnet ist, der dazu ausgebildet ist, die aus dem Nahbereich (13) zurückgeworfenen zweiten Lichtimpulse (11) aufzunehmen
- und die an einem Objekt (6) im Nahbereich (13) zurückgeworfenen zweiten Lichtimpulse (11) in Form von elektrischen Empfangssignalen der Auswerteeinheit (7) zuführt,
- wobei der zweite Lichtsender (10) und der zweite Lichtempfänger (12) einen Nahbereichssensor (14) bilden,
- wobei der zweite Lichtempfänger (12) mindestens eine Einzelphotonenlawinendiode (16) aufweist.

2. Laserscanner nach Anspruch 1, **dadurch gekennzeichnet, dass** die Auswerteeinheit (7) unter Berücksichtigung der Lichtgeschwindigkeit aus der Zeit zwischen Aussendung der zweiten Lichtimpulse (11) durch den zweiten Lichtsender (10) und Empfang der zweiten Lichtimpulse (11) durch den zweiten Lichtempfänger (12) ein für den Abstand (8) des Objektes (6) zum Laserscanner (1) repräsentatives Abstandssignal ermittelt.

3. Laserscanner nach einem der vorhergehenden Ansprüche, **dadurch gekennzeichnet, dass** dem ersten Lichtsender (2) eine Sendeoptik, insbesondere eine Linse vorgeordnet ist.

4. Laserscanner nach einem der vorhergehenden Ansprüche, **dadurch gekennzeichnet, dass** dem ersten Lichtempfänger (4) eine Empfangsoptik, insbesondere eine Linse vorgeordnet ist.

5. Laserscanner nach einem der vorhergehenden Ansprüche, **dadurch gekennzeichnet, dass** der Nahbereichssensor (14) an der Lichtablenkeinheit (9) angeordnet ist, insbesondere auf der gegenüberliegenden Seite eines Umlenkspiegels (19) der Lichtablenkeinheit (9).

6. Laserscanner nach einem der Ansprüche 1-4, **dadurch gekennzeichnet, dass** zwischen dem zweiten Lichtsender (10) und dem Messbereich (5) die Lichtablenkeinheit (9) angeordnet ist, welche die zweiten Lichtimpulse (11) in sich fortlaufend verändernden Richtungen in den Messbereich (5) umlenkt.

7. Laserscanner nach einem der vorhergehenden Ansprüche, **dadurch gekennzeichnet, dass** die Messfrequenz des Nahbereichssensors (14) geringer ist als die Messfrequenz des ersten Lichtsenders (2) und des ersten Lichtempfängers (4).

8. Laserscanner nach einem der vorhergehenden Ansprüche, **dadurch gekennzeichnet, dass** der Nahbereichssensor (14) Referenztestziele (20) des Laserscanners (1) erfasst, wodurch der Nahbereichssensor (14) testbar ist.

9. Laserscanner nach einem der vorhergehenden Ansprüche, **dadurch gekennzeichnet, dass** der Nahbereichssensor (14) eine Frontscheibe (21) des Laserscanners (1) erfasst, wodurch Verschmutzungen auf der Frontscheibe (21) detektierbar sind.

10. Laserscanner nach einem der vorhergehenden Ansprüche, **dadurch gekennzeichnet, dass** der Nahbereichssensor (14) Reflektoren (22), insbesondere Retroreflektoren im Messbereich (5) erfasst.

11. Laserscanner nach einem der vorhergehenden Ansprüche, **dadurch gekennzeichnet, dass** der Nahbereichssensor (14) einen dritten Lichtempfänger als Referenzempfänger (27) als zweiten Empfangskanal zur sicherheitsgerichteten Selbsttestung aufweist.

12. Laserscanner nach einem der vorhergehenden Ansprüche, **dadurch gekennzeichnet, dass** der Nahbereichssensor (14) einen dritten Lichtsender als Referenzlichtsender (26) zur sicherheitsgerichteten Selbsttestung aufweist.

## Claims

1. A laser scanner in accordance with the time of flight principle having a first light transmitter (2) which transmits consecutive first light pulses (3) into a measured zone (5) and having
- a first light receiver (4) which receives the light pulses (3) reflected at an object (6) in the measured zone (5) and supplies them in the form of received electrical signals to an evaluation unit (7);
- which determines a distance signal representative of the distance (8) of the object (6) from the laser scanner (1) while taking account of the speed of light from the time between the transmission and the reception of the light pulse (3);
- and a light deflection unit (9) which is arranged between the first light transmitter (2) and the measured zone (5) and which deflects the light pulses (3) in continuously changing directions into the measured zone (5),
**characterized in that**
- a second light transmitter (10) is present which, in comparison with the first light transmitter (2), transmits consecutive second light pulses (11) having a reduced power into a near zone (13);
- a second light receiver (12) is arranged which is configured to receive the second light pulses (11) reflected from the near zone (13);
- and supplies the second light pulses (11) reflected at an object (6) in the near zone (13) in the form of received electrical signals to the evaluation unit (7),
- wherein the second light transmitter (10) and the second light receiver (12) form a near zone sensor (14);
- and wherein the second light receiver (12) has at least one single photon avalanche diode (16).

2. A laser scanner in accordance with claim 1, **characterized in that** the evaluation unit (7) determines a distance signal representative of the distance (8) of the object (6) from the laser scanner (1) from the time between the transmission of the second light pulses (11) by the second light transmitter (10) and the reception of the second light pulses (11) by the second light receiver (12) while taking account of the speed of light.

3. A laser scanner in accordance with one of the preceding claims, **characterized in that** a transmission optics, in particular a lens, is arranged upstream of the first light transmitter (2).

4. A laser scanner in accordance with any one of the preceding claims, **characterized in that** a reception optics, in particular a lens, is arranged upstream of the first light transmitter (4).

5. A laser scanner in accordance with any one of the preceding claims, **characterized in that** the near zone sensor (14) is arranged at the light deflection unit (9), in particular at the oppositely disposed side of a deflection mirror (19) of the light deflection unit (9).

6. A laser scanner in accordance with any one of the claims 1 to 4, **characterized in that** the light deflection unit (9) which deflects the second light pulses (11) in continuously changing directions into the measured zone (5) is arranged between the second light transmitter (10) and the measured zone (5).

7. A laser scanner in accordance with any one of the preceding claims, **characterized in that** the measurement frequency of the near zone sensor (14) is smaller than the measurement frequency of the first light transmitter (2) and of the first light receiver (4).

8. A laser scanner in accordance with any one of the preceding claims, **characterized in that** the near zone sensor (14) detects reference test targets (20) of the laser scanner (1), whereby the near zone sensor (14) is testable.

9. A laser scanner in accordance with any one of the preceding claims, **characterized in that** the near zone sensor (14) detects a front screen (21) of the laser scanner (1), whereby contamination on the front screen (21) is detectable.

10. A laser scanner in accordance with any one of the preceding claims, **characterized in that** the near zone sensor (14) detects reflectors (22), in particular retroreflectors in the measured zone (5).

11. A laser scanner in accordance with any one of the preceding claims, **characterized in that** the near zone sensor (14) has a third light receiver as a reference receiver (27) as a second reception channel for a safety-related self-test.

12. A laser scanner in accordance with any one of the preceding claims, **characterized in that** the near zone sensor (14) has a third light transmitter as a reference light transmitter (26) for a safety-related self-test.

## Revendications

1. Scanneur laser selon le principe du temps de parcours de lumière, comportant un premier émetteur de lumière (2) qui émet de premières impulsions lumineuses successives (3) dans une zone de mesure (5), et comportant
- un premier récepteur de lumière (4) qui reçoit les impulsions lumineuses (3) réfléchies par un objet (6) dans la zone de mesure (5) et qui les amène sous forme de signaux de réception électriques jusqu'à une unité d'évaluation (7),
- qui, en prenant en compte la vitesse de la lumière à partir de la durée entre l'émission et la réception de l'impulsion lumineuse (3), détecte un signal de distance représentatif de la distance (8) de l'objet (6) par rapport au scanneur laser (1),
- ainsi qu'une unité de déviation de lumière (9) agencée entre le premier émetteur de lumière (2) et la zone de mesure (5), qui dévie vers la zone de mesure (5) les impulsions lumineuses (3) dans des directions qui varient en continu,
**caractérisé en ce que**
- il existe un second émetteur de lumière (10) qui émet dans une zone de proximité (13) de secondes impulsions lumineuses successives (11) à puissance réduite par comparaison au premier émetteur de lumière (2),
- il existe un second récepteur de lumière (12) qui est réalisé pour recevoir les secondes impulsions lumineuses (11) réfléchies depuis la zone de proximité (13),
- et qui amène à l'unité d'évaluation (7) les secondes impulsions lumineuses (11) réfléchies par un objet (6) dans la zone de proximité (13) sous forme de signaux de réception électriques,
- le second émetteur de lumière (10) et le second récepteur de lumière (12) constituent un capteur de zone de proximité (14),
- le second récepteur de lumière (12) comprend au moins une diode à avalanche monophotonique (16).

2. Scanneur laser selon la revendication 1, **caractérisé en ce que** l'unité d'évaluation (7), en prenant en compte la vitesse de la lumière à partir de la durée entre l'émission des secondes impulsions lumineuses (11) par le second émetteur de lumière (10) et la réception des secondes impulsions lumineuses (11) par le second récepteur de lumière (12), détecte un signal de distance représentatif de la distance (8) de l'objet (6) par rapport au scanneur laser (1).

3. Scanneur laser selon l'une des revendications précédentes, **caractérisé en ce qu'**il est prévu une optique d'émission, en particulier une lentille, disposée en amont du premier émetteur de lumière (2).

4. Scanneur laser selon l'une des revendications précédentes, **caractérisé en ce qu'**il est prévu une optique de réception, en particulier une lentille, disposée en amont du premier récepteur de lumière (4).

5. Scanneur laser selon l'une des revendications précédentes, **caractérisé en ce que** le capteur de zone de proximité (14) est agencé sur l'unité de déviation de lumière (9), en particulier sur le côté opposé d'un miroir de renvoi (19) de l'unité de déviation de lumière (9).

6. Scanneur laser selon l'une des revendications 1 à 4, **caractérisé en ce que** l'unité de déviation de lumière (9) qui dévie vers la zone de mesure (5) les secondes impulsions lumineuses (11) dans des directions qui varient en continu est agencée entre le second émetteur de lumière (10) et la zone de mesure (5).

7. Scanneur laser selon l'une des revendications précédentes, **caractérisé en ce que** la fréquence de mesure du capteur de zone de proximité (14) est inférieure à la fréquence de mesure du premier émetteur de lumière (2) et du premier récepteur de lumière (4).

8. Scanneur laser selon l'une des revendications précédentes, **caractérisé en ce que** le capteur de zone de proximité (14) balaie des cibles test de référence (20) du scanneur laser (1), ce qui permet de tester le capteur de zone de proximité (14).

9. Scanneur laser selon l'une des revendications précédentes, **caractérisé en ce que** le capteur de zone de proximité (14) balaie une vitre frontale (21) du scanneur laser (1), ce qui permet de détecter des encrassements sur la vitre frontale (21).

10. Scanneur laser selon l'une des revendications précédentes, **caractérisé en ce que** le capteur de zone de proximité (14) balaie des réflecteurs (22), en particulier des rétro-réflecteurs, dans la zone de mesure (5).

11. Scanneur laser selon l'une des revendications précédentes, **caractérisé en ce que** le capteur de zone de proximité (14) comprend un troisième récepteur de lumière à titre de récepteur de référence (27) comme second canal de réception pour l'autotest relatif à la sécurité.

12. Scanneur laser selon l'une des revendications précédentes, **caractérisé en ce que** le capteur de zone de proximité (14) comprend un troisième émetteur de lumière à titre d'émetteur de lumière de référence (26) pour l'autotest relatif à la sécurité.
